# EUROPEAN PATENT SPECIFICATION

(11) **EP 2 922 265 B1**
(45) Date of publication and mention of the grant of the patent: **04.05.2016**
(21) Application number: 14169196.4
(22) Date of filing: 21.05.2014
(51) Int. Cl.: G06F 21/55, G06F 21/56, H04L 29/06

(54) **System and methods for detection of fraudulent online transactions**
System und Verfahren zur Erkennung betrügerischer Online-Transaktionen
Système et procédés permettant de détecter des transactions frauduleuses en ligne

(30) Priority: 20.03.2014 RU 2014110601; 29.04.2014 US 201414264501
(43) Date of publication of application: 23.09.2015
(73) Proprietor: Kaspersky Lab, ZAO, Moscow 125212 (RU)
(72) Inventor: Golovanov, Sergey Y., 125212 Moscow (RU); Monastyrsky, Alexey V., 125212 Moscow (RU)
(74) Representative: Sloboshanin, Sergej

(56) References cited:
- US-A1- 2004 098 607
- US-A1- 2012 158 541
- US-A1- 2012 297 476

## Description

### Technical Field

The present disclosure pertains to computer security, and more specifically, to systems and methods for detection of fraudulent online transactions.

### Background

There is a large amount of software at present that can be used to perform various online transactions. Many transactions are performed via online banking, using standard browsers, and individual banking clients are also used, being especially popular on mobile platforms. When using a browser to perform a transaction, the user generally goes to the bank site and performs an authentication (which is sometimes a two-factor type, for example, with the aid of SMS or a token), after which he/she is able to perform operations with his/her own funds.

With the growth of online payments, hackers have become interested in this service segment, and they are actively looking for ways to intercept transaction data for the unlawful transfer of funds. The theft of transaction data generally takes place by using malicious programs which get onto the computers of users (infecting the computers). Such programs most often get onto infected computers through popular Internet browsers and intercept data being entered from input devices (such as a keyboard or mouse), or they intercept data being sent to the network. For example, malicious programs infecting browsers gain access to the browser files and look at the history of visits and the passwords saved when visiting web pages. Data entry interceptors (or keyloggers) intercept the entry of data from a keyboard or mouse, take pictures of screens (or screenshots) and conceal their presence in the system by means of various rootkit technologies. Such technologies are also used by interceptors of network packets (or traffic sniffers), which intercept network packets being transmitted, extracting valuable information from them, such as passwords and other personal data. Most often, the infection occurs by utilizing vulnerabilities in software which make it possible to use various exploits to penetrate the computer system.

The existing antivirus technologies such as the use of signature or heuristic checks, methods of proactive protection or the use of lists of trusted applications (or whitelists), although able to detect many malicious programs on the computers of users, are not always able to determine their new modifications, which are appearing more frequently day by day. Thus, solutions are needed which can secure the procedure of performing online payments by users.

However, no methods have been described at present that could detect unknown malicious programs that affect transactions (such as those carrying out a Man-in-the-Browser attack). Even if it would be possible on the bank side to reject a transaction from a client because it includes suspicious circumstances, on the client side the malicious program can still continue working for a long time, until an antivirus program is installed, the antivirus databases are updated, or the user performs a reinstallation of the operating system or a rollback.

US 2012/0297476 A1 describes a method for verifying a transaction using a user device. The method comprises the steps of obtaining, from a server computer in communication with a client device, a first version of sesssion data; obtaining, from the user device, a second version of the session data; comparing the first version of the session data to the second version of the session data; and determining if a mismatch exists between the first version of the session data and the second version of the session data.

US 2004/0098607 A1 describes a method for securing online transactions, comprising executing an anti-malicious code program to detect malicious code on a user computer, wherein the anti-malicious code program performs at least one mitigation action in response to detection of malicious code, and if no malicious code is found, then the user is allowed to proceed normally with the online transaction.

### Summary

Disclosed is a system and a method for providing security for user transactions by detection of malicious programs that are used for fraudulent transactions as set forth in independent claims 1 and 10. An example method may include determining, by a security service, that an online transaction related to a payment service has been initiated at a computer by a user of the computer. The method may further include collecting first information from the computer and second information from the payment service, and determining, based on the collected information, whether the online transaction is suspicious. When the online transaction is determined to be suspicious, the method may determine whether a malicious program can be identified on the computer. When the malicious program is identified, the method may perform one or more remedial actions with respect to the detected malicious program.

The online transaction may be determined to be initiated when one or more of the following events occur: the user starts a browser on the computer, the user goes on a website associated with the online transaction, the user enters a user login and password at the website, and the user directly requests provision of security for the online transaction.

The first information may include one or more of an antivirus database version of the computer, events related to detection of malicious programs at the computer in a period of time, antivirus components being used at the computer, data input modules and entry patterns used by the user of the computer, a detection log of an anti-phishing module at the computer, an identifier of the computer, processes started at the computer, file operations at the computer, registry operations at the computer, a list of network connections of the computer, a list of devices connected to the computer, vulnerabilities at the computer, and installed updates for the operating system or applications of the computer.

The second information may include one or more of information on the online transaction, information on the browser of the computer, an identifier of the computer, structure information of a webpage seen by the user of the computer, and data input modules and entry patterns used by the user of the computer.

The online transaction may be determined to be suspicious further based on third information obtained from network provider and fourth information obtained from the security service.

The fourth information may include one or more of transaction information related to the online transaction, a history of transactions related to an account of the user of the computer, and possible risks associated with the online transaction.

The third information may include a network traffic route from the computer to the payment service.

Determining whether the malicious program can be identified on the computer may include: determining whether the antivirus of the computer can identify the malicious program on the computer; and when the antivirus of the computer cannot identify the malicious program, further determining whether the malicious program can be identified on the computer by performing one or more of: downloading a latest version of an antivirus database for the antivirus program; checking a file system, a registry, processes started, network connections opened on the computer with more thorough check settings, changing rules for application control to allow only trusted applications or applications with no known vulnerabilities to be started, rebooting the computer with additional checks for rootkits and bootkits, and accessing a security service or analysts of the payment service.

The remedial actions may include one or more of: performing a rollback of an operating system of the computer to a preceding state from a backup copy; removing the malicious program and performing a rollback of the changes made by it; canceling the online transaction; warning the user of the computer as to a possible substitution of the online transaction by a fraudulent transaction; and notifying the payment service as to transactions from the user of the computer or from the computer as being possibly suspicious.

According to another aspect, an example system for providing security for online transactions includes a processor that may be configured to determine that an online transaction related to a payment service has been initiated at a computer by a user of the computer; collect first information from the computer and second information from the payment service; determine, based on the first information and the second information, whether the online transaction is suspicious; when the online transaction is determined to be suspicious, determine whether a malicious program can be identified on the computer; and when the malicious program is identified, perform one or more remedial actions with respect to the detected malicious program.

According to yet another aspect, a computer program product stored on a non-transitory computer-readable storage medium comprises computer-executable instructions for providing security for online transactions, including instructions for determining, by a security service, that an online transaction related to a payment service has been initiated at a computer by a user of the computer; collecting first information from the computer and second information from the payment service; determining, based on the first information and the second information, whether the online transaction is suspicious; when the online transaction is determined to be suspicious, determining whether a malicious program can be identified on the computer; and when the malicious program is identified, performing one or more remedial actions with respect to the detected malicious program.

The above simplified summary of example aspects serves to provide a basic understanding of the present disclosure. This summary is not an extensive overview of all contemplated aspects, and is intended to neither identify key or critical elements of all aspects nor delineate the scope of any or all aspects of the present disclosure. Its sole purpose is to present one or more aspects in a simplified form as a prelude to the more detailed description of the disclosure that follows. To the accomplishment of the foregoing, the one or more aspects of the present disclosure include the features described and particularly pointed out in the claims.

### Brief description of the drawings

The accompanying drawings, which are incorporated into and constitute a part of this specification, illustrate one or more example aspects of the present disclosure and, together with the detailed description, serve to explain their principles and implementations.
Fig. 1 illustrates an example system for providing security for online transactions.
Fig. 2 is a flowchart of an example method according to some present aspects.
Fig. 3 shows an example of a general-purpose computer system on which the present invention can be implemented.

### Detailed Description

Example aspects are described herein in the context of a system, method, and computer program product for providing security for online transactions. Those of ordinary skill in the art will realize that the following description is illustrative only and is not intended to be in any way limiting. Other aspects will readily suggest themselves to those skilled in the art having the benefit of this disclosure. Reference will now be made in detail to implementations of the example aspects as illustrated in the accompanying drawings. The same reference indicators will be used to the extent possible throughout the drawings and the following description to refer to the same or like items.

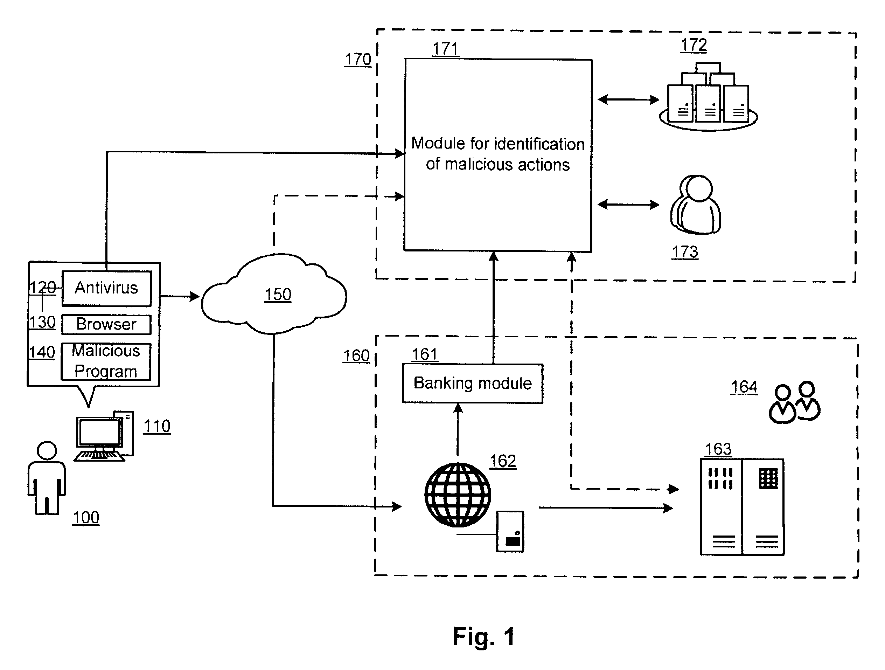

**Fig. 1** shows an example system for providing security for online transactions according to some present aspects. The user 100 is working at a computer 110, employing a browser 130 to perform online transactions via a payment service 160. The user employs the browser 130 to go to the website 162 of the payment service 160. Browser 130 may be, for example, web browsers such as Internet Explorer or Google Chrome, but may also include other applications configured to perform online transactions, such as banking clients.

If an antivirus 120 is installed on the computer 110, one may not be assured that the computer is free of malicious programs 140, which may get onto the computer for various reasons, for example, because the antivirus database of antivirus 120 was not timely updated, the antivirus 120 was installed after the malicious program 140 got onto the computer, the user 100 set a low level of protection in the settings of the antivirus 120, or the malicious program was not yet known or analyzed by the antivirus company. Thus, there may be a risk that the user may be deceived by various methods used to carry out fraudulent transactions. For example, phishing makes it possible to mimic with great veracity the website 162 of the payment service 160, while the use of a man-in-the-browser (MITM) attack makes it possible to counterfeit the digital certificate of the website, which may deceive the user, but also result in skipping a possible antivirus checking of the website.

In order to avoid the possible compromising of the user and the performing of a fraudulent transaction, the payment service 160 may include its own security analysts 164 and mechanisms for checking the validity of transactions (validity checking mechanisms 163), which are engaged in checking the component parts of a transaction (e.g., information on the payer, details of the transaction such as time, frequency, amount) to identify suspicious transactions which may turn out to be fraudulent. However, not having complete information about the computer system 110, the security analysts 164 and transaction validity checking mechanisms 163 may not be able to fully evaluate the possible risk for each subsequent transaction and may make a mistake, since the creators of malicious programs 140 may be improving their techniques to get past not only the scrutiny of the user 100 and the antivirus technologies, but also the checking algorithms on the side of the banks and payment services.

However, the system also includes a security service 170, which includes a module for identification of malicious actions 171, as well as antivirus analysts 173 and a malicious program database 172. The antivirus analysts 173 play an auxiliary role, correcting the work of the module for identification of malicious actions 171, which plays the main role in the identification of malicious activity on the computer 110, and blocking fraudulent transactions, using feedback with the transaction validity checking mechanism 163 on the payment service 160 side. The malicious program database 172 may include algorithms for detection of malicious programs such as, for example, those specified in US patents US7640589, US7743419, US8356354, and US8572740. The malicious program database 172 may also include rules for detection of malicious applications, which are used by the module for identification of malicious actions 171 on the basis of data from the antivirus 120 and the banking module 161, which is installed on the side of the payment service 160 and provides information to the side of the security service 170. Optionally, in the module for identification of malicious actions 171, information is obtained from the network providers 150 and the transaction validity checking mechanism 163. The network providers 150 may be, for example, local Internet providers whose services are being used by the users 100, or major providers which control the main communications networks which link together autonomous systems (AS).

Identification of malicious actions is performed based on events on the side of the computer 110 of the user 100 and information obtained from the banking module 161.

An example of the information on the side of the computer 110 may include:
- the antivirus database version;
- events connected with the detection of malicious programs in a given period of time, such as a day or a month;
- the antivirus **120** status in the form of the components being used, such as the firewall, the file antivirus, the web antivirus;
- the use of data input modules by the user **100,** entry patterns in the form of, for example, the frequency of typing keys or moving the mouse;
- the detection log of the antiphishing module;
- the identifier of the computer **110;**
- the processes started;
- file operations;
- registry operations;
- the list of network connections;
- the list of connected devices, such as a token;
- vulnerabilities at the computer **110** side;
- installed updates for the operating system or such applications as the browser **130.**

The information on the side of the computer **110** may be more detailed than the example list provided herein. For example, if the antivirus **120** includes a firewall, then the module for identification of malicious actions **171** may also be sent information not only about the type of connections and processes which open them, but also more detailed information, such as information from the HTTP headers in the form of cookie data, the type of data being transmitted, the type of agent (the browser **130**) and so on.

An example of the information on the side of the banking module **161** may include:
- information on the transaction (account, time of the transaction, amount of funds, and so on);
- information on the browser **130;**
- the identifier of the computer **110** (which may be calculated from a number of indirect parameters, such as the IP address);
- the structure of the web page which is seen by the user **100** (e.g., DOM model);
- the use of data input modules by the user **100,** entry patterns in the form of, for example, the frequency of key strokes or mouse movements.

The module for identification of malicious actions **171** may also obtain information from the network providers **150** and the transaction validity checking mechanism **163.** An example of this information from the transaction validity checking mechanism **163** may include:
- more detailed information on the transaction;
- the history of transactions relating to the accounts of the user **100;**
- possible risks associated with a specific transaction or user **100.**

The network providers **150** may also indicate the traffic route from the user **100** to the website **162.** Furthermore, in order to determine possible anomalies, techniques may be used to determine the traffic route, such as those in US patent publication number US 20130086636.

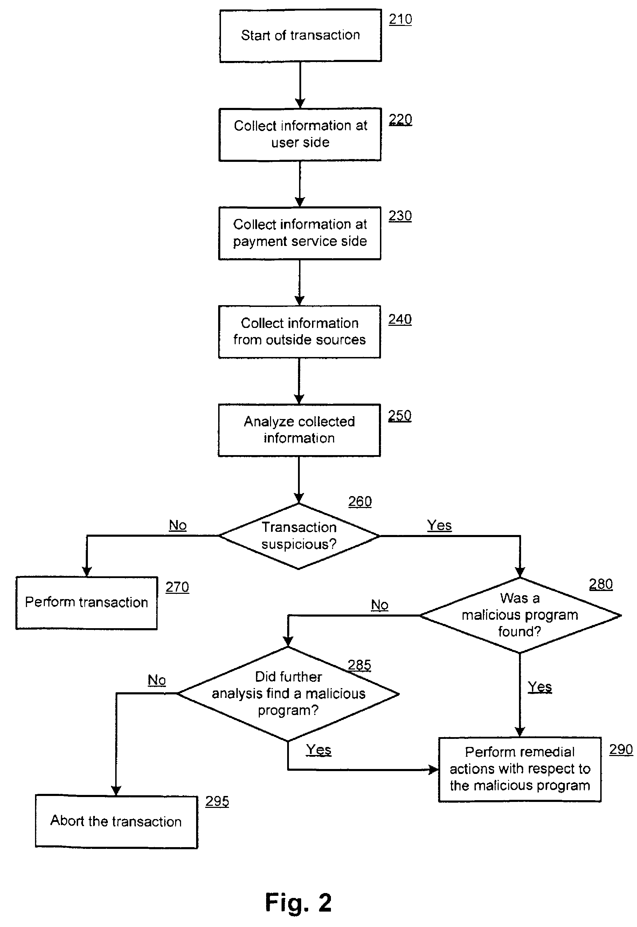

**Fig. 2** is a flowchart of an example method according to some aspects. In step **210** the user **100** initiates a transaction, which may be determined based on various criteria such as:
- the user **100** has started the browser;
- the user **100** has entered the website **162;**
- the user **100** enters his/her login and password on the website **162,** that is, is authenticated on the website **162** for possible carrying out of an online transaction;
- the user independently selects the system of protection of the online transaction with the aid of the system according to example aspects (e.g., the user directly requests provision of security for the online transaction).

After step **210,** in steps **220, 230, 240** information is collected from the side of the computer **110** (with the aid of the antivirus **120** in step **220**), the banking module **161** (step **230**), and also the network providers **150** and the transaction validity checking mechanism **163** (step **240**). In step **250** an analysis is made on the information collected. Next, in step **260,** it is determined whether or not the transaction is suspicious. If the transaction is not suspicious, the transaction is completed without any restrictions in step **270.** If the transaction is classified as suspicious, then in step **280** it is determined whether it was possible to identify on the side of the computer **100** a malicious program **140** with the aid of the antivirus **120.** In this case, if a malicious program **140** could not be identified at once, then in step **285** a further analysis is performed, after which in step **290** the consequences of the working of the malicious program are cleared away. But if the further analysis was not able to identify a malicious program, then in step **295** the transaction is aborted and the user is informed about the suspicious activity on his/her computer.

The further analysis in step **285** may include, for example, one or more of the following:
- downloading the latest version of the antivirus databases;
- checking the file system (e.g., on demand scan), the registry, and the processes downloaded with more "thorough" check settings;
- changing the rules for application control, allowing only trusted applications or applications with no known vulnerabilities to be started;
- rebooting the computer with additional check for rootkits and bootkits;
- accessing the security service of the payment service **160** or the side of the security service **170** (for example, accessing the analysts **173**).

Clearing away of the consequences of the working of a malicious program 290 may include one or more of the following:
- rollback of the operating system to one of the preceding states (e.g., from a backup copy);
- removal of the malicious program found, and also rollback of the changes made by it;
- cancellation of the current transaction;
- warning of the user **100** as to the possible substitution of the current transaction by a fraudulent one;
- notification of the payment service **160** as to transactions from the particular user 100 being possibly suspicious (or those from the computer 110).

The following are examples of the method of Fig. 2.

### Example No. 1

After the start of the transaction, events relating to entry from a keyboard and mouse are registered in the browser window, but no data has arrived from physical devices, The banking module **161** is also able to send information about the successful authentication (e.g., the entry of data from the computer **110** was successful), but the antivirus **120** sends a notification as to the possible use of a remote administration service. As a countermeasure, the current transaction is prevented, and an analysis is initiated on the computer of the processes initiated (including trusted ones) and the connections used. In addition, an anti-rootkit check may be performed after rebooting the computer to discover any hidden drivers in the operating system.

### Example No. 2

The banking module **161** is able to send information on successful authentication (e.g., the data input from the computer **110** was successful), but the antivirus **120** sends information that the certificate of the website **162** is different from the previous one and is not reliable. Thus, there is a Man-in-the-Browser attack, after which an antivirus check is started on the computer **110,** and the current transaction is rejected at the side of the payment service **160.**

### Example No. 3

The module for identification of malicious actions **171** determines from the identifier of the computer that a transaction is being done from a computer **110** that has been previously noted as being a computer from which suspicious transactions are performed. This information may be obtained from a history of fraudulent transactions on the side of the transaction validity checking mechanisms **163.** In such a case, a request is sent to the side of the antivirus **120** of the given computer **110** as to the status of the antivirus protection (e.g., the date of last check, the number of malicious programs found, the status of the antivirus databases). If it was determined that the last check did not find any malicious programs, then the current transaction is allowed, otherwise it is rejected and the antivirus **120** performs additional checks.

The additional antivirus checks may be done with more thorough settings than were assigned by the user **100.** The user **100** may be sent a notification as to possible fraud involving his/her computer **110,** and the need to check the computer **110** for the presence of malicious programs.

### Example No. 4

It is determined that the patterns of data entry by the user do not match. Such discrepancies may be discovered either by comparing the patterns of entry with the aid of the antivirus **120** on the computer **110** and the banking module **161,** or on the basis of the history of known patterns of entry on the part of the user **100.** In this case, the transaction is flagged as suspicious and a further antivirus check is ordered.

### Example No. 5

The user **100** goes to the website of a payment service, however the address of the website is not confirmed as a trusted one on the part of the module for identification of malicious actions **171.** On the part of the banking module **161** it is also discovered that the website **162** may be compromised (for example, an XSS attack). After this, the transaction is aborted, and a notification as to the vulnerability discovered is sent to the payment service.

### Example No. 6

It is determined that the antivirus **120** is compromised. For example, the module for identification of malicious actions **171** receives information from the antivirus **120** that the protective functions are turned on at present during the performance of a transaction. However, information arrives from the banking module **161** that the transaction may be fraudulent: the entry pattern on the part of the user does not match, or there is different information about the browser **130** previously used for transactions on the part of the computer **110.** A notification is sent to the antivirus **120** to reboot the computer and perform an antivirus check for the presence of rootkits and bootkits, and also to carry out an update of antivirus databases.

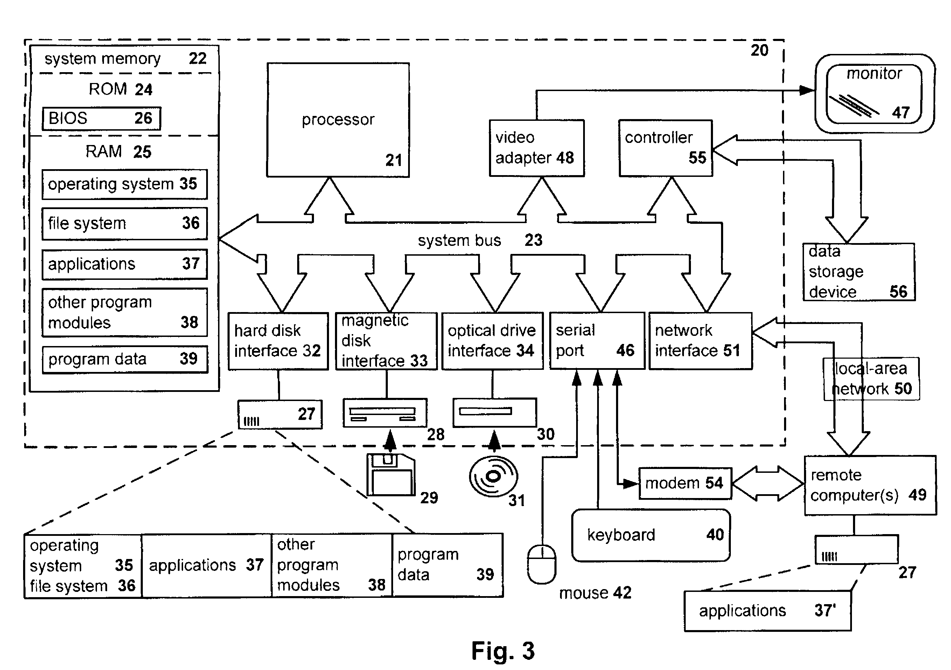

Fig. 3 shows an example of a general-purpose computer system (which may be a personal computer or a server) 20, including a central processing unit 21, a system memory 22 and a system bus 23 connecting the various system components, including the memory associated with the central processing unit 21. The system bus 23 is realized like any bus structure known from the prior art, containing in turn a bus memory or bus memory controller, a peripheral bus and a local bus, which is able to interact with any other bus architecture. The system memory includes permanent memory (ROM) 24 and random-access memory (RAM) 25. The basic input/output system (BIOS) 26 includes the basic procedures ensuring the transfer of information between elements of the personal computer 20, such as those at the time of loading the operating system with the use of the ROM 24.

The personal computer 20, in turn, includes a hard disk 27 for reading and writing of data, a magnetic disk drive 28 for reading and writing on removable magnetic disks 29 and an optical drive 30 for reading and writing on removable optical disks 31, such as CD-ROM, DVD-ROM and other optical information media. The hard disk 27, the magnetic disk drive 28, and the optical drive 30 are connected to the system bus 23 across the hard disk interface 32, the magnetic disk interface 33 and the optical drive interface 34, respectively. The drives and the corresponding computer information media are power-independent modules for storage of computer instructions, data structures, program modules and other data of the personal computer 20.

The present disclosure provides the implementation of a system that uses a hard disk 27, a removable magnetic disk 29 and a removable optical disk 31, but it should be understood that it is possible to employ other types of computer information media 56 which are able to store data in a form readable by a computer (solid state drives, flash memory cards, digital disks, random-access memory (RAM) and so on), which are connected to the system bus 23 via the controller 55.

The computer 20 has a file system 36, where the recorded operating system 35 is kept, and also additional program applications 37, other program modules 38 and program data 39. The user is able to enter commands and information into the personal computer 20 by using input devices (keyboard 40, mouse 42). Other input devices (not shown) can be used: microphone, joystick, game controller, scanner, and so on. Such input devices usually plug into the computer system 20 through a serial port 46, which in turn is connected to the system bus, but they can be connected in other ways, for example, with the aid of a parallel port, a game port or a universal serial bus (USB). A monitor 47 or other type of display device is also connected to the system bus 23 across an interface, such as a video adapter 48. In addition to the monitor 47, the personal computer can be equipped with other peripheral output devices (not shown), such as loudspeakers, a printer, and so on.

The personal computer 20 is able to work in a network environment, using a network connection to one or more remote computers 49. The remote computer (or computers) 49 are also personal computers or servers having the majority or all of the aforementioned elements in describing the nature of a personal computer 20, as shown in Fig. 3. Other devices can also be present in the computer network, such as routers, network stations, peer devices or other network nodes.

Network connections can form a local-area computer network (LAN) 50 and a wide-area computer network (WAN). Such networks are used in corporate computer networks and internal company networks, and they generally have access to the Internet. In LAN or WAN networks, the personal computer 20 is connected to the local-area network 50 across a network adapter or network interface 51. When networks are used, the personal computer 20 can employ a modem 54 or other modules for providing communications with a wide-area computer network such as the Internet. The modem 54, which is an internal or external device, is connected to the system bus 23 by a serial port 46. It should be noted that the network connections are only examples and need not depict the exact configuration of the network, i.e., in reality there are other ways of establishing a connection of one computer to another by technical communication modules.

The systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

The systems and methods described in the present disclosure in terms of modules. The term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module can also be implemented as a combination of the two, with certain functions facilitated by hardware alone, and other functions facilitated by a combination of hardware and software. In certain implementations, at least a portion, and in some cases, all, of a module can be executed on the processor of a general purpose computer (such as the one described in greater detail in Fig. 3 above). Accordingly, each module can be realized in a variety of suitable configurations, and should not be limited to any particular implementation exemplified herein.

In the interest of clarity, not all of the routine features of the aspects are disclosed herein. It will be appreciated that in the development of any actual implementation of the present disclosure, numerous implementation-specific decisions must be made in order to achieve the developer's specific goals, and that these specific goals will vary for different implementations and different developers. It will be appreciated that such a development effort might be complex and time-consuming, but would nevertheless be a routine undertaking of engineering for those of ordinary skill in the art having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

The various aspects disclosed herein encompass present and future known equivalents to the known modules referred to herein by way of illustration. Moreover, while aspects and applications have been shown and described, it would be apparent to those skilled in the art having the benefit of this disclosure that many more modifications than mentioned above are possible without departing from the inventive concepts disclosed herein.

## Claims

1. A method for providing security for online transactions, comprising:
determining, by a processor at a security service (170), that an online transaction related to a payment service (160) has been initiated at a computer (110) by a user (100) of the computer (110);
collecting first information from the computer (110) and second information from the payment service (160);
determining, based on the first information and the second information, whether the online transaction is suspicious;
when the online transaction is determined to not be suspicions, allowing the online transaction to be processed;
**characterised in that** :
when the online transaction is determined to be suspicious, determining whether an antivirus program installed on the computer (110) is capable of detecting a malicious program associated with the online transaction on the computer (110);
when the malicious program is detected by the antivirus program, performing one or more remedial actions with respect to the detected malicious program; and
when the antivirus program is determined to not be capable of detecting the malicious program, aborting the online transaction.

2. The method of claim 1, wherein the online transaction is determined to be initiated when one or more of the following events occur:
the user (100) starts a browser (130) on the computer (110),
the user (100) goes on a website associated with the online transaction,
the user (100) enters a user login and password at the website, and
the user (100) directly requests provision of security for the online transaction.

3. The method according to any of the preceding claims, wherein the first information includes one or more of:
an antivirus database version of the computer (110),
events related to detection of malicious programs at the computer (110) in a period of time,
antivirus components being used at the computer (110),
data input modules and entry patterns used by the user (100) of the computer (110),
a detection log of an anti-phishing module at the computer (110),
an identifier of the computer (110),
processes started at the computer (110),
file operations at the computer (110),
registry operations at the computer (110),
a list of network connections of the computer (110),
a list of devices connected to the computer (110),
vulnerabilities at the computer (110), and
installed updates for the operating system or applications of the computer (110).

4. The method according to any of the preceding claims, wherein the second information includes one or more of:
information on the online transaction,
information on the browser (130) of the computer (110),
an identifier of the computer (110),
structure information of a webpage seen by the user (100) of the computer (110), and
data input modules and entry patterns used by the user (100) of the computer (110).

5. The method according to any of the preceding claims, wherein the online transaction is determined to be suspicious further based on third information obtained from a network provider and fourth information obtained from the security service (170).

6. The method of claim 5, wherein the fourth information includes one or more of:
transaction information related to the online transaction,
a history of transactions related to an account of the user (100) of the computer (110), and
possible risks associated with the online transaction.

7. The method of claim 5 or 6, wherein the third information includes a network traffic route from the computer (110) to the payment service (160).

8. The method according to any of the preceding claims, wherein detecting the malicious program on the computer (110) includes:
detecting the malicious program on the computer (110) using an antivirus program of the computer (110); and
when the antivirus program of the computer (110) fails to detect the malicious program, detecting the malicious program on the computer (110) by performing one or more of:
downloading a latest version of an antivirus database for the antivirus program;
checking a file system, a registry, processes started, network connections opened on the computer (110) with more thorough check settings,
changing rules for application control to allow only trusted applications or applications with no known vulnerabilities to be started,
rebooting the computer (110) with additional checks for rootkits and bootkits, and
accessing a security service (170) or analysts (164) of the payment service (160).

9. The method according to any of the preceding claims, wherein the remedial actions include one or more of:
performing a rollback of an operating system of the computer (110) to a preceding state from a backup copy;
removing the malicious program and performing a rollback of the changes made by it;
canceling the online transaction;
warning the user (100) of the computer (110) as to a possible substitution of the online transaction by a fraudulent transaction; and
notifying the payment service (160) as to transactions from the user (100) of the computer (110) or from the computer (110) as being possibly suspicious.

10. A system for providing security for online transactions, comprising:
a processor configured to:
determine that an online transaction related to a payment service (160) has been initiated at a computer (110) by a user (100) of the computer (110);
collect first information from the computer (110) and second information from the payment service (160);
determine, based on the first information and the second information, whether the online transaction is suspicious;
**characterised in that**
when the online transaction is determined to not be suspicious, allow the online transaction to be processed;
when the online transaction is determined to be suspicious, determine whether an antivirus program installed on the computer (110) is capable of detecting a malicious program associated with the online transaction on the computer (110);
when the malicious program is detected by the antivirus program, perform one or more remedial actions with respect to the detected malicious program; and
when the antivirus program is determined to not be capable of detecting the malicious program, abort the online transaction.

11. The system of claim 10, wherein the online transaction is determined to be suspicious further based on third information obtained from a network provider and fourth information obtained from the security service (170).

12. The system of claim 11, wherein the fourth information includes one or more of:
transaction information related to the online transaction,
a history of transactions related to an account of the user (100) of the computer (110), and
possible risks associated with the online transaction.

13. The system of claim 11 or 12, wherein the third information includes a network traffic route from the computer (110) to the payment service (160).

14. The system according to one of claims 10 to 13, wherein detecting the malicious program on the computer (110) includes:
detecting the malicious program on the computer (110) using an antivirus program of the computer (110); and
when the antivirus program of the computer (110) fails to detect the malicious program, detecting the malicious program on the computer (110) by performing one or more of:
downloading a latest version of an antivirus database for the antivirus program;
checking a file system, a register, processes started, network connections opened on the computer (110) with more thorough check settings,
changing rules for application control to allow only trusted applications or applications with no known vulnerabilities to be started,
rebooting the computer (110) with additional checks for rootkits and bootkits, and
accessing a security service (170) or analysts (164) of the payment service (160).

15. The system according to one of claims 10 to 14, wherein the remedial actions include one or more of:
performing a rollback of an operating system of the computer (110) to a preceding state from a backup copy;
removing the malicious program and performing a rollback of the changes made by it;
canceling the online transaction;
warning the user (100) of the computer (110) as to a possible substitution of the online transaction by a fraudulent transaction; and
notifying the payment service (160) as to transactions from the user (100) of the computer (110) or from the computer (110) as being possibly suspicious.

## Patentansprüche

1. Verfahren zur Bereitstellung von Sicherheit für Online-Transaktionen, umfassend:
Bestimmen durch einen Prozessor bei einem Sicherheitsdienst (170), dass eine auf einen Zahlungsdienst (160) bezogene Online-Transaktion auf einem Computer (110) durch einen Benutzer (100) des Computers (110) initiiert wurde;
Sammeln von ersten Informationen von dem Computer (110) und zweiten Informationen von dem Zahlungsdienst (160);
Bestimmen auf der Basis der ersten Informationen und der zweiten Informationen, ob die Online-Transaktion verdächtig ist;
wenn die Online-Transaktion als nicht verdächtig bestimmt wird, Erlauben,
dass die Online-Transaktion durchgeführt wird,
**dadurch gekennzeichnet, dass**:
wenn die Online-Transaktion als verdächtig bestimmt wird, Bestimmen, ob ein auf dem Computer (110) installiertes Antivirusprogramm in der Lage ist, ein der Online-Transaktion auf dem Computer (110) zugeordnetes Schadprogramm zu erkennen;
wenn das Schadprogramm von dem Antivirusprogramm erkannt wird, Durchführen einer oder mehrerer Abhilfemaßnahmen bezogen auf das erkannte Schadprogramm; und
wenn bestimmt wird, dass das Antivirusprogramm nicht in der Lage ist, das Schadprogramm zu erkennen, Abbrechen der Online-Transaktion.

2. Verfahren nach Anspruch 1, bei dem bestimmt wird, dass die Online-Transaktion initiiert wurde, wenn eines oder mehrere der folgenden Ereignisse eintreten:
der Benutzer (100) startet einen Browser (130) auf dem Computer (110),
der Benutzer (100) geht auf eine der Online-Transaktion zugeordnete Website,
der Benutzer (100) gibt ein Benutzer-Login und ein Passwort auf der Website ein, und
der Benutzer (100) fordert direkt die Bereitstellung von Sicherheit für die Online-Transaktion an.

3. Verfahren nach irgendeinem der vorhergehenden Ansprüche, bei dem die ersten Informationen eine oder mehrere umfassen von:
einer Antivirusdatenbankversion des Computers (110),
Ereignissen, die auf die Erkennung von Schadprogrammen auf dem Computer (110) in einem Zeitraum bezogen sind,
auf dem Computer (110) verwendeten Antiviruskomponenten,
von dem Benutzer (100) des Computers (110) verwendeten Dateneingabemodulen und Eingabemustern,
einem Erkennungsprotokoll eines Anti-Phishing-Moduls auf dem Computer (110),
einem Identifikator des Computers (110),
auf dem Computer (110) gestarteten Prozessen,
Dateiausführungen auf dem Computer (110),
Registry-Vorgänge auf dem Computer (110),
einer Liste von Netzwerkverbindungen des Computers (110),
einer Liste von mit dem Computer (110) verbundenen Vorrichtungen,
Anfälligkeiten auf dem Computer (110) und
installierten Updates für das Betriebssystem oder Anwendungen auf dem Computer (110).

4. Verfahren nach irgendeinem der vorhergehenden Ansprüche, bei dem die zweiten Informationen eine oder mehrere umfassen von:
Informationen über die Online-Transaktion,
Informationen über den Browser (130) des Computers (110),
einem Identifikator des Computers (110),
Strukturinformationen einer Webseite, die der Benutzer (100) des Computers (110) sieht, und
von dem Benutzer (100) des Computers (110) verwendeten Dateneingabemodulen und Eingabemustern.

5. Verfahren nach irgendeinem der vorhergehenden Ansprüche, bei dem die Online-Transaktion weiterhin basierend auf von einem Netzwerkprovider erhaltenen dritten Informationen und auf von dem Sicherheitsdienst (170) erhaltenen vierten Informationen als verdächtig bestimmt wird.

6. Verfahren nach Anspruch 5, bei dem die vierten Informationen eine oder mehrere umfassen von:
auf die Online-Transaktion bezogenen Transaktionsinformationen,
einer Chronik der auf ein Konto des Benutzers (100) des Computers (110) bezogenen Transaktionen, und
der Online-Transaktion zugeordneten möglichen Risiken.

7. Verfahren nach Anspruch 5 oder 6, bei dem die dritten Informationen einen Netzwerkverkehrsweg von dem Computer (110) zu dem Zahlungsdienst (160) umfassen.

8. Verfahren nach irgendeinem der vorhergehenden Ansprüche, bei dem das Erkennen des Schadprogramms auf dem Computer (110) umfasst:
Erkennen des Schadprogramms auf dem Computer (110) durch Verwendung eines Antivirusprogramms des Computers (110); und
wenn das Antivirusprogramm des Computers (110) nicht in der Lage ist, das Schadprogramm zu erkennen, Erkennen des Schadprogramms auf dem Computer (110) durch das Ausführen eines oder mehrerer von:
Herunterladen einer neuesten Version einer Antivirusdatenbank für das Antivirusprogramm;
Überprüfen eines Dateisystems, eines Registers, von gestarteten Prozessen, von auf dem Computer (110) geöffneten Netzwerkverbindungen mit gründlicheren Überprüfungseinstellungen;
Ändern der Regeln der Anwendungssteuerung, um nur das Starten von vertrauenswürdigen Anwendungen oder Anwendungen ohne bekannte Anfälligkeiten zu erlauben,
Neustarten des Computers (110) mit zusätzlichen Überprüfungen auf Rootkits und Bootkits, und
Zugreifen auf einen Sicherheitsdienst (170) oder Analysten (164) des Zahlungsdiensts (160).

9. Verfahren nach irgendeinem der vorhergehenden Ansprüche, bei dem die Abhilfemaßnahmen eines oder mehrere umfassen von:
Ausführen eines Rollbacks eines Betriebssystems des Computers (110) auf einen vorhergehenden Status von einer Backup-Kopie;
Entfernen des Schadprogramms und Ausführen eines Rollbacks der durch es durchgeführten Änderungen;
Stornieren der Online-Transaktion;
Warnen des Benutzers (100) des Computer (110) bezüglich eines möglichen Austauschs der Online-Transaktion durch eine betrügerische Transaktion; und
Benachrichtigen des Zahlungsdienstes (160), dass die Transaktionen des Benutzers (100) des Computers (110) oder des Computers (110) möglicherweise verdächtig sind.

10. System zur Bereitstellung von Sicherheit für Online-Transaktionen mit einem Prozessor, der konfiguriert ist für das:
Bestimmen, dass eine auf einen Zahlungsdienst (160) bezogene Online-Transaktion auf einem Computer (110) durch einen Benutzer (100) des Computers (110) initiiert wurde;
Sammeln von ersten Informationen von dem Computer (110) und zweiten Informationen von dem Zahlungsdienst (160);
Bestimmen auf der Basis der ersten Informationen und der zweiten Informationen, ob die Online-Transaktion verdächtig ist;
**dadurch gekennzeichnet, dass**
wenn die Online-Transaktion als nicht verdächtig bestimmt wird, Erlauben,
dass die Online-Transaktion durchgeführt wird,
wenn die Online-Transaktion als verdächtig bestimmt wird, Bestimmen, ob ein auf dem Computer (110) installiertes Antivirusprogramm in der Lage ist, ein der Online-Transaktion auf dem Computer (110) zugeordnetes Schadprogramm zu erkennen;
wenn das Schadprogramm von dem Antivirusprogramm erkannt wird, Durchführen einer oder mehrerer Abhilfemaßnahmen bezogen auf das erkannte Schadprogramm; und
wenn bestimmt wird, dass das Antivirusprogramm nicht in der Lage ist, das Schadprogramm zu erkennen, Abbrechen der Online-Transaktion.

11. System nach Anspruch 10, bei dem die Online-Transaktion weiterhin basierend auf von einem Netzwerkprovider erhaltenen dritten Informationen und auf von dem Sicherheitsdienst (170) erhaltenen vierten Informationen als verdächtig bestimmt wird.

12. System nach Anspruch 11, bei dem die vierten Informationen eine oder mehrere umfassen von:
auf die Online-Transaktion bezogenen Transaktionsinformationen,
einer Chronik der auf ein Konto des Benutzers (100) des Computers (110) bezogenen Transaktionen, und
der Online-Transaktion zugeordneten möglichen Risiken.

13. System nach Anspruch 11 oder 12, bei dem die dritten Informationen einen Netzwerkverkehrsweg von dem Computer (110) zu dem Zahlungsdienst (160) umfassen.

14. System nach irgendeinem der Ansprüche 10 bis 13, bei dem das Erkennen des Schadprogramms auf dem Computer (110) umfasst:
Erkennen des Schadprogramms auf dem Computer (110) durch Verwendung eines Antivirusprogramms des Computers (110); und
wenn das Antivirusprogramm des Computers (110) nicht in der Lage ist, das Schadprogramm zu erkennen, Erkennen des Schadprogramms auf dem Computer (110) durch das Ausführen eines oder mehrerer von:
Herunterladen einer neuesten Version einer Antivirusdatenbank für das Antivirusprogramm;
Überprüfen eines Dateisystems, eines Registers, von gestarteten Prozessen, von auf dem Computer (110) geöffneten Netzwerkverbindungen mit gründlicheren Überprüfungseinstellungen;
Ändern der Regeln der Anwendungssteuerung, um nur das Starten von vertrauenswürdigen Anwendungen oder Anwendungen ohne bekannte Anfälligkeiten zu erlauben,
Neustarten des Computers (110) mit zusätzlichen Überprüfungen auf Rootkits und Bootkits, und
Zugreifen auf einen Sicherheitsdienst (170) oder Analysten (164) des Zahlungsdiensts (160).

15. System nach irgendeinem der Ansprüche 10 bis 14, bei dem die Abhilfemaßnahmen eines oder mehrere umfassen von:
Ausführen eines Rollbacks eines Betriebssystems des Computers (110) auf einen vorhergehenden Status von einer Backup-Kopie;
Entfernen des Schadprogramms und Ausführen eines Rollbacks der durch es durchgeführten Änderungen;
Stornieren der Online-Transaktion;
Warnen des Benutzers (100) des Computer (110) bezüglich eines möglichen Austauschs der Online-Transaktion durch eine betrügerische Transaktion; und Benachrichtigen des Zahlungsdienstes (160), dass die Transaktionen des Benutzers (100) des Computers (110) oder des Computers (110) möglicherweise verdächtig sind.

## Revendications

1. Un procédé de fourniture de sécurité pour des transactions en ligne, comprenant :
la détermination, par un processeur au niveau d'un service de sécurité (170), qu'une transaction en ligne en rapport avec un service de paiement (160) a été initiée sur un ordinateur (110) par un utilisateur (100) de l'ordinateur (110),
le recueil de premières informations à partir de l'ordinateur (110) et de deuxièmes informations à partir du service de paiement (160),
la détermination, en fonction des premières informations et des deuxièmes informations, si la transaction en ligne est suspecte,
lorsque la transaction en ligne est déterminée ne pas être suspecte, permettre à la transaction en ligne d'être traitée,
**caractérisé en ce que**
lorsque la transaction en ligne est déterminée être suspecte, la détermination si un programme antivirus installé sur l'ordinateur (110) est capable de détecter un programme malveillant associé à la transaction en ligne sur l'ordinateur (110),
lorsque le programme malveillant est détecté par le programme antivirus, l'exécution d'une ou de plusieurs actions correctives vis-à-vis du programme malveillant détecté, et
lorsque le programme antivirus est déterminé ne pas être capable de détecter le programme malveillant, l'interruption de la transaction en ligne.

2. Le procédé selon la revendication 1, dans lequel la transaction en ligne est déterminée être initiée lorsqu'un ou plusieurs des événements suivants se produit :
l'utilisateur (100) lance un navigateur (130) sur l'ordinateur (110),
l'utilisateur (100) se rend sur un site web associé à la transaction en ligne,
l'utilisateur (100) entre un identifiant et mot de passe d'utilisateur au niveau du site web, et
l'utilisateur (100) demande directement la fourniture d'une sécurité pour la transaction en ligne.

3. Le procédé selon l'une quelconque des revendications précédentes, dans lequel les premières informations comprennent un ou plusieurs éléments parmi :
une version d'une base de données d'antivirus de l'ordinateur (110),
des événements en rapport avec la détection de programmes malveillants sur l'ordinateur (110) dans une période temporelle,
des composants antivirus qui sont utilisés sur l'ordinateur (110),
des modules d'entrée de données et des modèles d'entrée utilisés par l'utilisateur (100) de l'ordinateur (110),
un journal de détection d'un module anti-hameçonnage sur l'ordinateur (110),
un identifiant de l'ordinateur (110),
des procédés lancés sur l'ordinateur (110),
des opérations de fichier sur l'ordinateur (110),
des opérations de registre sur l'ordinateur (110),
une liste de connexions réseau de l'ordinateur (110),
une liste de dispositifs raccordés à l'ordinateur (110),
des vulnérabilités sur l'ordinateur (110), et
des mises à jours installées pour le système d'exploitation ou des applications de l'ordinateur (110).

4. Le procédé selon l'une quelconque des revendications précédentes, dans lequel les deuxièmes informations comprennent un ou plusieurs éléments parmi :
des informations relatives à la transaction en ligne,
des informations relatives au navigateur (130) de l'ordinateur (110),
un identifiant de l'ordinateur (110),
des informations de structure d'une page web vue par l'utilisateur (100) de l'ordinateur (110), et
des modules d'entrée de données et des modèles d'entrée utilisés par l'utilisateur (100) de l'ordinateur (110).

5. Le procédé selon l'une quelconque des revendications précédentes, dans lequel la transaction en ligne est déterminée être suspecte en fonction en outre de troisièmes informations obtenues à partir d'un fournisseur de réseau et de quatrièmes informations obtenues à partir du service de sécurité (170).

6. Le procédé selon la revendication 5, dans lequel les quatrièmes informations comprennent un ou plusieurs éléments parmi :
des informations de transaction en rapport avec la transaction en ligne,
un historique de transactions en rapport avec un compte de l'utilisateur (100) de l'ordinateur (110), et
des risques possibles associés à la transaction en ligne.

7. Le procédé selon la revendication 5 ou 6, dans lequel les troisièmes informations comprennent une voie de trafic de réseau de l'ordinateur (110) au service de paiement (160).

8. Le procédé selon l'une quelconque des revendications précédentes, dans lequel la détection du programme malveillant sur l'ordinateur (110) comprend :
la détection du programme malveillant sur l'ordinateur (110) au moyen d'un programme antivirus de l'ordinateur (110), et
lorsque le programme antivirus de l'ordinateur (110) échoue à détecter le programme malveillant, la détection du programme malveillant sur l'ordinateur (110) par l'exécution d'un ou de plusieurs éléments parmi :
le téléchargement d'une version la plus récente d'une base de données d'antivirus pour le programme antivirus,
la vérification d'un système de fichiers, d'un registre, de procédés lancés, de connexions réseau ouvertes sur l'ordinateur (110) avec des réglages de vérification plus stricts,
la modification de règles de contrôle d'applications de façon à permettre uniquement à des applications de confiance ou des applications avec aucune vulnérabilités connue d'être lancées,
le réamorçage de l'ordinateur (110) avec des vérifications additionnelles relatives à des programmes malveillants furtifs et des kits d'amorçage, et
l'accès à un service de sécurité (170) ou à des analystes (164) du service de paiement (160).

9. Le procédé selon l'une quelconque des revendications précédentes, dans lequel les actions correctives comprennent une ou plusieurs actions parmi :
l'exécution d'un retour en arrière d'un système d'exploitation de l'ordinateur (110) vers un état précédent à partir d'une copie de sauvegarde,
la suppression du programme malveillant et l'exécution d'un retour en arrière des modifications effectuées par celui-ci,
l'annulation de la transaction en ligne,
l'avertissement de l'utilisateur (100) de l'ordinateur (110) concernant une substitution possible de la transaction en ligne par une transaction frauduleuse,
et
la notification du service de paiement (160) concernant des transactions provenant de l'utilisateur (100) de l'ordinateur (110) ou provenant de l'ordinateur (110) comme étant éventuellement suspectes.

10. Un système de fourniture de sécurité pour des transactions en ligne, comprenant :
un processeur configuré de façon à :
déterminer qu'une transaction en ligne en rapport avec un service de paiement (160) a été initiée sur un ordinateur (110) par un utilisateur (100) de l'ordinateur (110),
recueillir des premières informations à partir de l'ordinateur (110) et des deuxièmes informations à partir du service de paiement (160),
déterminer, en fonction des premières informations et des deuxièmes informations, si la transaction en ligne est suspecte,
**caractérisé en ce que**
lorsque la transaction en ligne est déterminée ne pas être suspecte, permettre à la transaction en ligne d'être traitée,
lorsque la transaction en ligne est déterminée être suspecte, déterminer si un programme antivirus installé sur l'ordinateur (110) est capable de détecter un programme malveillant associé à la transaction en ligne sur l'ordinateur (110),
lorsque le programme malveillant est détecté par le programme antivirus, exécuter une ou plusieurs actions correctives vis-à-vis du programme malveillant détecté, et
lorsque le programme antivirus est déterminé ne pas être capable de détecter le programme malveillant, interrompre la transaction en ligne.

11. Le système selon la revendication 10, dans lequel la transaction en ligne est déterminée être suspecte en fonction en outre de troisièmes informations obtenues à partir d'un fournisseur de réseau et de quatrièmes informations obtenues à partir du service de sécurité (170).

12. Le système selon la revendication 11, dans lequel les quatrièmes informations comprennent un ou plusieurs éléments parmi :
des informations de transaction en rapport avec la transaction en ligne,
un historique de transactions en rapport avec un compte de l'utilisateur (100) de l'ordinateur (110), et
des risques possibles associés à la transaction en ligne.

13. Le système selon la revendication 11 ou 12, dans lequel les troisièmes informations comprennent une voie de trafic de réseau de l'ordinateur (110) au service de paiement (160).

14. Le système selon l'une quelconque des revendications 10 à 13, dans lequel la détection du programme malveillant sur l'ordinateur (110) comprend :
la détection du programme malveillant sur l'ordinateur (110) au moyen d'un programme antivirus de l'ordinateur (110), et
lorsque le programme antivirus de l'ordinateur (110) échoue à détecter le programme malveillant, la détection du programme malveillant sur l'ordinateur (110) par l'exécution d'un ou de plusieurs éléments parmi :
le téléchargement d'une version la plus récente d'une base de données d'antivirus pour le programme antivirus,
la vérification d'un système de fichiers, d'un registre, de procédés lancés, de connexions réseau ouvertes sur l'ordinateur (110) avec des réglages de vérification plus stricts,
la modification de règles de contrôle d'applications de façon à permettre uniquement à des applications de confiance ou à des applications avec aucune vulnérabilité connue d'être lancées,
le réamorçage de l'ordinateur (110) avec des vérifications additionnelles relatives à des programmes malveillants furtifs et des kits d'amorçage, et
l'accès à un service de sécurité (170) ou à des analystes (164) du service de paiement (160).

15. Le système selon l'une quelconque des revendications 10 à 14, dans lequel les actions correctives comprennent un ou plusieurs éléments parmi :
l'exécution d'un retour en arrière d'un système d'exploitation de l'ordinateur (110) vers un état précédent à partir d'une copie de sauvegarde,
la suppression du programme malveillant et l'exécution d'un retour en arrière des modifications effectuées par celui-ci,
l'annulation de la transaction en ligne,
l'avertissement de l'utilisateur (100) de l'ordinateur (110) concernant une substitution possible de la transaction en ligne par une transaction frauduleuse, et
la notification du service de paiement (160) concernant des transactions provenant de l'utilisateur (100) de l'ordinateur (110) ou provenant de l'ordinateur (110) comme étant éventuellement suspectes.
